(19) Europäisches Patentamt
European Patent Office
Office européen des brevets

(11) **EP 4 036 823 A1**

(12) **EUROPEAN PATENT APPLICATION**
published in accordance with Art. 153(4) EPC

(43) Date of publication:
**03.08.2022 Bulletin 2022/31**

(21) Application number: **19946633.5**

(22) Date of filing: **09.12.2019**

(51) International Patent Classification (IPC):
***G06Q 10/06*** (2012.01)

(52) Cooperative Patent Classification (CPC):
**G06Q 10/06395; G06Q 10/06393**

(86) International application number:
**PCT/CN2019/124127**

(87) International publication number:
**WO 2021/056837 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2019 CN 201910912490**

(71) Applicant: **Ai Speech Co., Ltd.
Suzhou, Jiangsu 215021 (CN)**

(72) Inventors:
• **REN, Yi**
**Suzhou, Jiangsu 215021 (CN)**

• **ZHANG, Jin**
**Suzhou, Jiangsu 215021 (CN)**
• **XU, Jianwei**
**Suzhou, Jiangsu 215021 (CN)**
• **CAO, Zhisheng**
**Suzhou, Jiangsu 215021 (CN)**
• **CHU, Min**
**Suzhou, Jiangsu 215021 (CN)**

(74) Representative: **Hautier IP - MC/EP
17, avenue Albert II
C/O The Office & Co - L'ALBU
98000 Monaco (MC)**

(54) **CUSTOMIZATION PLATFORM AND METHOD FOR SERVICE QUALITY EVALUATION PRODUCT**

(57) Disclosed is a customization platform for service quality evaluation product, comprising an account management module generating a registration interface and a product creation interface for guiding a user to register and log in to customize a service quality evaluation product; an access mode configuration module generating a product access mode configuration interface for guiding user to configure an access mode for the service quality evaluation product; a voice transcription configuration module generating an industry type selection interface for guiding user to select an industry type and a corresponding voice recognition model for pre-training according to the industry type, the pre-trained voice recognition model converting an input audio file to text content; and a semantic analysis configuration module generating an evaluation information configuration interface for guiding user to input the evaluation information to perform service quality scoring according to the text content and the evaluation information.

Fig. 1

**Description**

The present disclosure claims the priority of a Chinese patent application No. 201910912490.5 filed before the China National Intellectual Property Administration on Wednesday, September 25, 2019, the entire of which is incorporated herein by reference.

TECHNICAL FIELD

The present application relates to the field of artificial intelligence technology, such as a customization platform for service quality evaluation product and method for service quality evaluation product.

BACKGROUND

With the development of social economy and the continuous upgrading of consumption, both consumers and merchants themselves are paying more and more attention to the service experience in the consumption process. Especially in offline stores in industries such as catering, fast-moving consumer goods, automobiles, and digital product service, service satisfaction has always been an important part of establishing a good reputation for merchants. Among them, the service level of the store service personnel is the most critical part.

At present, inspection of service quality of service personnel by enterprises mainly relies on manual supervision, including daily inspections, spot checking and questioning, reviewing records, on-site unannounced visiting, inquiry of customer opinions, and regular training and assessment. However, these human involved methods are not only inefficient and subjective, but also difficult to digitize the evaluation process, and cannot be used for fully analysis and mining.

With the development and application of artificial intelligence technology, technologies such as voice recognition and natural language processing have begun to be applied in the field of service quality inspection and evaluation. By making a sound recording for the service process and performing the whole process of voice recognition and semantic analysis for quality inspection and evaluation, it can make up for the shortcomings of human involved methods and improve the evaluation efficiency.

At present, the existing commercially available voice quality inspection and evaluation products are mainly used in the quality inspection system of the customer service telephone of a call center. For offline scenarios, voice recording and transcribing products formed by recording pens and recording boxes combined with voice recognition technology are often seen, but a general product for the field of service quality inspection and evaluation has not yet been formed.

Artificial intelligence-based voice quality inspection products generally consist of a voice acquisition module, a voice transcription module and a semantic analysis module. The voice acquisition module is mainly a software and hardware device for recording. The voice transcription module can convert the recorded audio files into text files. The semantic analysis module performs keyword detection and other processing on the converted text files, and provides the quality inspection analysis results.

In general, such product functions typically include:

Business term detection: whether the service personnel offer services in accordance with the specified terms;
Business process detection: whether the service personnel offer all the required services for customers; Emotion detection:
analyzing the mood of the interlocutor, whether there is an abnormal emotion such as anger;

Service taboo detection: whether the service personnel use disallowed or inappropriate words, etc.

The most significant defect of the existing products on the market is that they are not generalized, customized, or platform-based. The above-mentioned customer service telephone quality inspection systems applied to call centers are private services provided to large and medium-sized enterprises and are developed and deployed according to the needs of enterprises. Although voice recording and transcription products such as recording pens are versatile, they are mainly aimed at scenarios such as meeting records and lack customized functions for service evaluation.

Many scenarios of offline services, such as catering stores, shopping guides, counter sales, product experience stores, etc., mainly orientate small enterprises and even individual merchants. It is necessary to design a platform-based service evaluation product according to the needs of these groups, which can provide a general voice quality inspection and evaluation function, and at the same time, it can support platform users to customize, and conveniently meet the personalized needs under different scenarios.

As mentioned above, an intelligent voice quality inspection product generally consists of a voice acquisition module, a voice transcription module and a semantic analysis module. Different scenarios have different requirements for these three modules. For example, a scenario with strong offline environmental noise has higher requirements on the noise reduction capability of the voice acquisition module. Professional terms differ in various service fields, and service personnel in different regions have different accents, so the requirements for the voice transcription module are different. Even in the same scenario and in the same region, different merchants have different orientation of their own service features, so the requirements for the analysis of the semantic analysis module are different.

Therefore, for different merchants, it is necessary to customize the voice acquisition module, voice transcription module and semantic analysis module. However, a difficulty in this field is how to provide a platform-based service that allows merchants in various scenarios to customize their own business scenarios based on the general functions of the platform.

## SUMMARY OF THE INVENTION

The present application provides a customization platform and method for service quality evaluation product to solve at least one of the above technical problems.

In a first aspect, the present application provides a customization platform for service quality evaluation product, comprising:

an account management module configured to generate a registration interface and a product creation interface for guiding a user to register and log in, so as to customize a service quality evaluation product;

an access mode configuration module configured to generate a product access mode configuration interface for guiding the user to configure an access mode for the service quality evaluation product;

a voice transcription configuration module configured to generate an industry type selection interface for guiding the user to select an industry type and select a corresponding voice recognition model for pre-training according to the industry type, and wherein the pre-trained voice recognition model is used to convert an input audio file to a text content; and

a semantic analysis configuration module configured to generate an evaluation information configuration interface for guiding the user to complete the input and submission of the evaluation information, so as to perform service quality scoring according to the text content and the evaluation information input and submitted by the user.

In a second aspect, an embodiment of the present application provides a customization method for service quality evaluation product, comprising:

an account management step generating a registration interface and a product creation interface for guiding a user to register and log in, so as to customize a service quality evaluation product;

an access mode configuration step generating a product access mode configuration interface for guiding the user to configure an access mode for the service quality evaluation product;

a voice transcription configuration step generating an industry type selection interface for guiding the user to select an industry type and select a corresponding voice recognition model for pre-training according to the industry type, and wherein the pre-trained voice recognition model is used to convert an input audio file to a text content; and

a semantic analysis configuration step enerating an evaluation information configuration interface for guiding the user to complete the input and submission of the evaluation information, so as to perform service quality scoring according to the text content and the evaluation information input and submitted by the user.

In a third aspect, an embodiment of the present application provides a storage medium for storing one or more programs including execution instructions therein, which can be read and executed by an electronic device (including but not limited to a computer, a server, or a network equipment, etc.) to perform any one of the above-mentioned customization method for service quality evaluation products of the present application.

In a fourth aspect, an embodiment of the present application provides an electronic device, including: at least one processor, and a memory communicatively connected to the at least one processor, wherein the memory stores instructions executable by the at least one processor, which are executed by the at least one processor to enable the at least one processor to perform any one of the above-mentioned customization method for service quality evaluation products of the present application.

In a fifth aspect, an embodiment of the present application further provides a computer program product including a computer program stored on a storage medium, which includes program instructions enabling a computer to perform any of the above-mentioned customization method for service quality evaluation products when executed by the computer.

The customization platform for service quality evaluation product of the present application provides merchants with open registration services, allowing the merchants to become platform users, create their own voice evaluation products in their own enterprise space, and allow users to customize their own service quality evaluation products conveniently, quickly and at low cost through visualized configuration interface settings of the voice transcription configuration module and the semantic analysis configuration module.

BRIEF DESCRIPTION OF THE DRAWINGS

Fig. 1 is a diagram showing architecture of the customization platform for service quality evaluation product according to an embodiment of the present application;
Fig. 2 is a flowchart of the customization method for service quality evaluation product according to an embodiment of the present application;
Fig. 3 is a diagram showing architecture of the customization platform for service quality evaluation product according to another embodiment of the present application;
Fig. 4 is a schematic diagram of the merchant products customization process in the present application;
Fig. 5 is a schematic diagram of the merchant voice evaluation process in the present application; and
FIG. 6 is a schematic structural diagram of an embodiment of the electronic device of the present application.

DETAILED DESCRIPTION

To make the objects, technical solutions, and advantages of the embodiments of the present invention clearer, the technical solutions in the embodiments of the present invention will be described clearly and completely in conjunction with the drawings in the embodiments of the present invention. Obviously, the described are merely some but not all of the embodiments of the present invention. Currently, two solutions are proposed in the industry in addressing the above problems of customization.

The first solution is that product developers conduct customized development for customers. This requires providers to deeply understand and analyze customers' business scenarios and customers' customized demands, and then conduct targeted R&D deployments. This solution results in high product cost and selling price, so it is usually provided to large and medium-sized enterprises only which can afford to purchase as private products and services, such as the aforementioned call center intelligent customer service voice quality inspection products.

The second solution is that refining and abstraction are performed for a specific scenario to provide general products and services, such as the aforementioned voice acquisition and transcription products. Such product is advantageous in their low cost, affordable price, and being capable of promotion in batches. The disadvantages of this solution are that the customization space is small, and that the customized product will become worthless in other scenario than that preset by the product, which cannot meet the needs of various customers.

In view of the above problems, the present application proposes a new platform-based design to provide a customizable voice evaluation platform for merchants. This kind of platform needs to decouple the three modules, i.e., voice acquisition module, voice transcription module, and semantic analysis module, then parameterize and interface each technical parts, and based on this, further package them into a platform-based product to provide SaaS services for merchants. This requires technical reserves in a whole chain for the above three modules, capabilities of independent design and development for voice transcription and semantic analysis, and concept and experience of platform-based products. It is difficult for practitioners in existing industries to have all these capabilities and conditions.

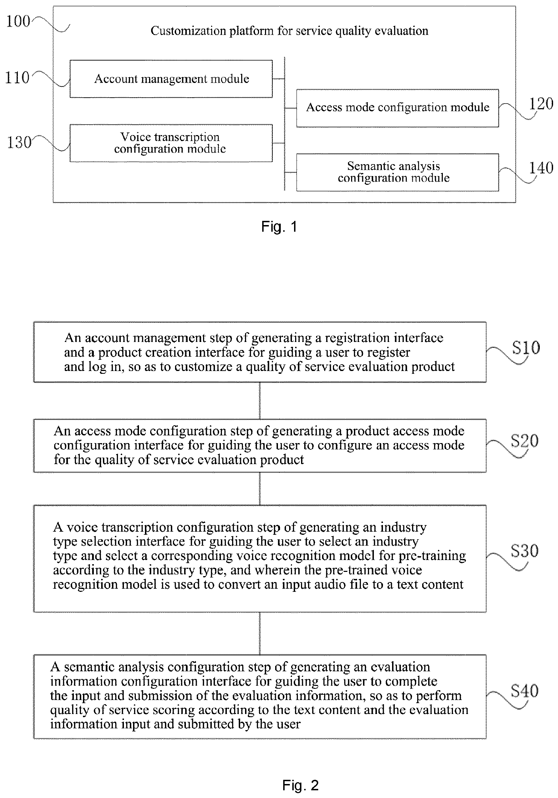

As shown in Fig. 1, an embodiment of the present application provides a customization platform for service quality evaluation product 100 comprising:

an account management module 110 configured to generate a registration interface and a product creation interface for guiding a user to register and log in, so as to customize a service quality evaluation product;
an access mode configuration module 120 configured to generate a product access mode configuration interface for guiding the user to configure an access mode for the service quality evaluation product;
a voice transcription configuration module 130 configured to generate an industry type selection interface for guiding the user to select an industry type and select a corresponding voice recognition model for pre-training according to the industry type, and wherein the pre-trained voice recognition model is used to convert an input audio file to a text content; and
a semantic analysis configuration module 140 configured to generate an evaluation information configuration interface for guiding the user to complete the input and submission of the evaluation information, so as to perform service quality scoring according to the text content and the evaluation information input and submitted by the user.

The customization platform for service quality evaluation product of the present application provides merchants with open registration services, allowing merchants to become platform users, create their own voice evaluation products in their own enterprise space, and allow users to customize their own service quality evaluation products conveniently, quickly and at low cost through visualized configuration interface settings of the voice transcription configuration module and the semantic analysis configuration module.

In some embodiments, the evaluation information configuration interface includes: a sub-interface for guiding a user to configure an evaluation dimension; a sub-interface for guiding the user to configure weights for the evaluation dimension; and a sub-interface for guiding the user to configure an evaluation function for each evaluation dimension.

Exemplarily, the evaluation dimensions for the user to select are displayed in the form of a list under the evaluation dimension sub-interface. The evaluation dimensions may include: service enthusiasm, explanation expertise, and speech compliance, etc. Based on the present embodiment, users can select required evaluation dimensions according to their actual needs, so as to customize service quality evaluation products that are more in line with their actual conditions.

Exemplarily, when a user simultaneously selects three dimensions of service enthusiasm, explanation expertise, and speech compliance, a corresponding weight may be configured for each dimension spectrum based on the method of the present embodiment. The specific weight value can be set according to the difference in the user's emphasis on different evaluation dimensions, which truly achieves on-demand customization. The entire customization process is presented to the user in the form of a visual interface, which reduces user learning costs, simplifies operations, and improves customization efficiency.

In some embodiments, after the user completes the configuration of the evaluation function, a further step may be included to automatically configure a preset standard speech library for each evaluation function.

Exemplarily, after the user completes the configuration of the evaluation function, the customization platform for service quality evaluation product of the present embodiment automatically calls the corresponding preset standard speech library for service quality evaluation. The time cost required for the user to write their words is reduced by the preset method. In addition, due to the possible limitations of users, it is inevitable that there will be omissions in writing their own words, and the present application solves this problem by using the preset standard speech library (where the words are based on long-term accumulation and research in various industries).

In some embodiments, the evaluation information configuration interface further includes: a sub-interface for guiding the user to configure quality inspection standards for each evaluation function; and a sub-interface for guiding the user to upload the standards.

Exemplarily, the present application provides a way for the user to actively upload the standard speech by generating the sub-interface for guiding the user to upload the standard speech. Because for different users, in addition to the standard speech common to all restaurants, the stores (for example, restaurants) they operate may also want to have some unique standard speech for their own, and in this case, the preset standard speech library obviously can't meet the users' needs. The present embodiment satisfies the personalized needs of users.

In some embodiments, the voice transcription configuration module is further configured to generate a training sample upload interface, and the training samples includes hot word terms and business corpus.

And, selecting a corresponding voice recognition model for pre-training according to the industry type includes: The corresponding voice recognition model is pre-trained according to hot word terms and business corpus.

As shown in Fig. 2, an embodiment of the present application provides a customization method for service quality evaluation product, comprising:

an account management step of S10, which generates a registration interface and a product creation interface for guiding a user to register and log in, so as to customize a service quality evaluation product;

an access mode configuration step of S20, which generates a product access mode configuration interface for guiding the user to configure an access mode for the service quality evaluation product;

a voice transcription configuration step of S30, which generates an industry type selection interface for guiding the user to select an industry type and select a corresponding voice recognition model for pre-training according to the industry type, and wherein the pre-trained voice recognition model is used to convert an input audio file to a text content; and

a semantic analysis configuration step of S40, which generates an evaluation information configuration interface for guiding the user to complete the input and submission of the evaluation information, so as to perform service quality scoring according to the text content and the evaluation information input and submitted by the user.

The customization method for service quality evaluation product of the present application provides merchants with open registration services, allowing merchants to become platform users, create their own voice evaluation products in their own enterprise space, and allow users to customize their own service quality evaluation products conveniently, quickly and at low cost through visualized configuration interface settings of the voice transcription configuration module and the semantic analysis configuration module.

In some embodiments, the evaluation information configuration interface includes: a sub-interface for guiding a user to configure an evaluation dimension; a sub-interface for guiding the user to configure weights for the evaluation dimension; and a sub-interface for guiding the user to configure an evaluation function for each evaluation dimension.

Exemplarily, the evaluation dimensions for the user to select are displayed in the form of a list under the evaluation dimension sub-interface. The evaluation dimensions may include: service enthusiasm, explanation expertise, and speech compliance, etc. Based on the present embodiment, users can select required evaluation dimensions according to their actual needs, so as to customize service quality evaluation products that are more in line with their actual conditions.

Exemplarily, when a user simultaneously selects three dimensions of service enthusiasm, explanation expertise, and speech compliance, a corresponding weight may be configured for each dimension spectrum based on the method of the present embodiment. The specific weight value can be set according to the difference in the user's emphasis on different evaluation dimensions, which truly achieves on-demand customization. The entire customization process is presented to the user in the form of a visual interface, which reduces user's learning costs, simplifies operations, and improves customization efficiency.

In some embodiments, after the user completes the configuration of the evaluation function, a further step may be included to automatically configure a preset standard speech library for each evaluation function.

Exemplarily, after the user completes the configuration of the evaluation function, the customization platform for service quality evaluation product of the present embodiment automatically calls the corresponding preset standard speech library for service quality evaluation. The time cost required for the user to write their own words is reduced by the preset method. In addition, due to the possible limitations of users, it is inevitable that there will be omissions in writing their own words, and the present application solves this problem by using the preset standard speech library (where the words are based on long-term accumulation and research in various industries).

In some embodiments, the evaluation information configuration interface further includes: a sub-interface for guiding the user to configure quality inspection standards for each evaluation function; and a sub-interface for guiding the user to upload the standards.

Exemplarily, the present application provides a way for the user to actively upload the standard speech by generating the sub-interface for guiding the user to upload the standard speech. Because for different users, in addition to the standard speech common to all restaurants, the stores (for example, restaurants) they operate may also want to have some unique standard speech for their own, and in this case, the preset standard speech library obviously cannot meet the users' needs. The present embodiment satisfies the personalized needs of users.

In some embodiments, the voice transcription configuration module is further configured to generate a training sample upload interface, and the training samples include hot word terms and business corpus.

And, selecting a corresponding voice recognition model for pre-training according to the industry type includes: The corresponding voice recognition model is pre-trained according to hot word terms and business corpus.

The customization platform for service quality evaluation product of the present application is a voice evaluation platform for merchants. By providing open registration services to merchants, merchants are allowed to become platform users and create their own voice evaluation products in their own enterprise space. The platform supports a variety of voice acquisition devices, presets voice transcription models for a plurality of field scenarios, and provides selectable semantic analysis function items. Merchants can configure and combine the three links according to the needs of business scenarios to form their own exclusive voice evaluation products. For merchants with special needs or development capabilities, the platform also provides rich API interfaces and SDK packages to support merchants in secondary development based on the platform. In this way, the product features of generalization, customization and platformization are realized.

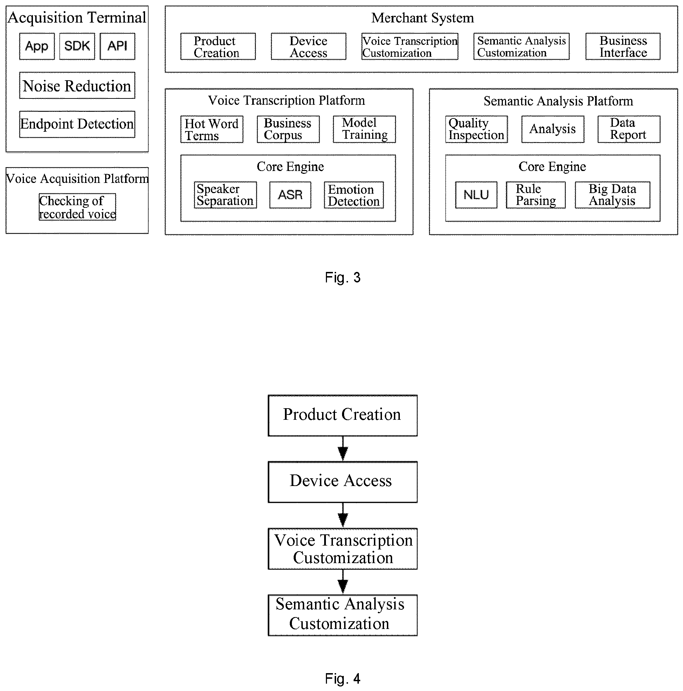

Fig. 3 is a diagram showing architecture of the customization platform for service quality evaluation product according to an embodiment of the present application. As shown in Fig. 3, the customization platform for service quality evaluation product of the present application includes an acquisition terminal, a voice acquisition platform, a merchant system, a voice writing platform and a semantic analysis platform.

For each module, the platform also provides different customized solutions:

For Voice Acquisition Module including the acquisition terminal and the voice acquisition platform, an integrated software and hardware solutions are provided, or mobile Apps that can be adapted to universal headsets, recording pens and other devices can also be provided. Merchants can directly ask service personnel to install them for use, and then the voice acquisition is available immediately. The acquisition terminal provides basic voice SDK for merchants who need to develop their own App. If the merchant already has a voice acquisition solution, an API voice upload interface is provided to upload voice files to the platform.

In addition, noise reduction processing is performed when the acquisition terminal performs the voice recording of the service personnel to avoid the interference of environmental noise. In addition, the endpoint detection technology can be used for audio acquisition, so as to reduce the audio size that needs to be recorded and uploaded as much as possible. In the voice acquisition platform, the recorded voice is checked and tuned.

For Merchant System, users are provided with configuration modules such as product creation, device access, voice writing customization, semantic analysis customization, and business interfaces.

For Voice Transcription Platform, it includes a core engine consisting of functions such as speaker separation, ASR, and emotion detection, as well as configurable hot word term units, business corpus units, and model training units. Voice recognition models for different business fields such as catering, fast-moving consumer goods, digital, and automobiles are provided. At the same time, it provides the function of uploading the merchant's own corpus, supports online addition of hot word terms, and online training of language models.

For Semantic Analysis Platform, it includes a core engine composed of functions such as NLU, rule parsing, and big data analysis. It also provides inter-functions (quality inspection functions such as standard speech detection, service process detection, keyword detection, service taboo detection, etc.), analysis functions (service quality analysis, correlation analysis, hot spot analysis, competitive product analysis and other analysis functions), and data reporting functions. Merchants can select the functions they need, and define the rules and parameters required by each function through the visual interface on the platform. At the same time, in addition to the basic data report view, the platform also provides a data query interface. Merchants can obtain analytical data through API and connect it with their own data visualization system.

The services provided by the voice evaluation platform for merchants can be described in two processes: one is a process of allowing merchants to create evaluation products and customize them according to their own needs; the other is a process of evaluating their own service personnel by merchants based on customized products. Hereinafter, they are referred to as "merchant product customization process" and "merchant voice evaluation process", respectively.

Fig. 4 is a schematic diagram of the merchant products customization process in the present application. Exemplarily, after the merchant registers and logs in on the open platform, the merchant product customization process can be entered:

Step 1: Product Creation

The merchant fills in the product creation form, enters the product name, and sets the necessary parameters to create a voice evaluation product. As a complete service unit, the product includes the aforementioned voice acquisition module, voice transcription module, and semantic analysis module, providing a complete service chain for the merchant voice evaluation process. That is, the subsequent merchant voice evaluation process is completed based on a certain product created in the merchant product customization process.

Step 2: Device Access

The merchant selects the appropriate access method, such as App, SDK or API, for the current product, and set necessary parameters thereof.

When App is selected as the method of access, the merchant can directly obtain the download link of the customization voice evaluation App (customization display of information such as product name, logo and setting parameters), and require their own store staff to scan the code to download, install and use. The voice evaluation App can be connected to the integrated voice acquisition device provided by the platform, and can also be adapted to common Bluetooth headsets and other devices.

When SDK is selected as the method of access, the merchant needs to download the corresponding SDK and development documents according to their own development environment, and integrates and calls them in their own software.

When API is selected as the method of access, the merchant can use the authentication provided by the platform according to the interface document, and uploads the recording file acquired by its own device to the platform through the voice file upload interface.

Step 3: Voice Transcription Customization

The merchant selects industry models for voice recognition of current product based on actual business scenarios, such as catering, automobiles, and fast-moving consumer goods. At the same time, the merchant can upload hot word terms and business corpus by themselves. The platform will conduct model training based on the industry model selected by the merchant in combination with the business corpus. The merchant is unaware of the training process.

In the actual voice transcription process, the platform selects a corresponding language model and hot word term for identification according to the product ID in the chain, so as to improve the accuracy of voice transcription in a targeted manner.

Step 4: Semantic Analysis Customization

The semantic analysis customization, as the last step in creating a product, is relatively more complicated. Therefore, the platform abstracts the business needs of most merchants, extracts more general customization rules, and guides merchants to complete this step quickly. The details are as follows (see Table 1):

4.1 Setting an evaluation dimension. For example, service quality can be evaluated through three dimensions of service enthusiasm, explanation expertise, and speech compliance. A dimension weight should be set for each dimension.

4.2 Setting rules for each dimension. For each dimension set in 4.1, a corresponding evaluation function, such as the aforementioned standard speech detection, service process detection, keyword detection, service taboo detection, etc., is selected. Then, a quality inspection rule is created under each function. A reward and punishment score should be set for each rule.

4.3 Setting standard speech. For each rule set in 4.2, detected words and keywords under the rule are uploaded as the evaluation criteria for semantic analysis.

4.4 Setting a scoring system. For example, whether the final score of the service personnel is subject to a smoothing process with reference to the overall score, and the service level delineation corresponding to the score or ranking, etc., are set.

Table 1 - Semantic Analysis Customization Dimension Table

| Evaluation Dimension | Dimension Wight | Evaluation Function | Quality Inspection Rule | Rule Score | Standard Speech | Score System |
|---|---|---|---|---|---|---|
| service enthusiasm | 50% | Standard speech detection | Serving a guest | Not hit -5 | Good morning, welcome to our store | Score: 85 B grade |
| | | | | | Good morning, it's my pleasure to be at your service | |
| | | | | | ... | |
| | | | Seeing a guest out | Not hit -5 | Hope to see you next time | |
| | | | | | Please take your belongings | |
| | | | | | | |
| | | Service process detection | Offering drinks | Hit +10 | Would you like something to drink | |
| | | | | | | |
| | | . .. | | | | |
| . .. | | | | | | |

So far, a voice evaluation product has been created. In addition, the merchant can create different products according to different business scenarios. After the product is created, the merchant can continue to adjust and modify the above steps, such as adding voice transcription training corpus, adjusting semantic rules according to business changes, etc.

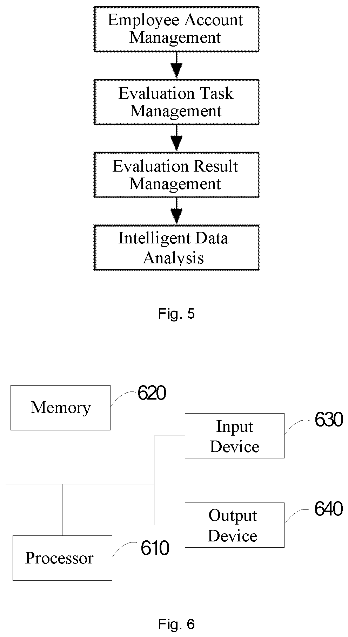

Fig. 5 is a schematic diagram of the merchant voice evaluation process in the present application. Exemplarily, after the product is created, the merchant can start to evaluate its own service personnel based on the voice evaluation platform, which specifically includes the following steps:

Step 1: Employee Account Management

On the platform, the merchant can create stores and positions, and then create service personnel accounts under each store and set their positions. Service personnel with a created account can log in and acquire their own service voice on the terminal, and view their own result report after the evaluation.

Step 2: Evaluation Task Management

The merchant can set evaluation tasks for each service scenario according to their stores and positions, and associate the tasks with customized evaluation products.

After the task is set, the service personnel belonging to the store and position will receive task reminders according to the task cycle, so as to complete the voice acquisition task. The acquired voice is uploaded to the evaluation platform for processing and analysis through the customization product link associated with the task, and the evaluation result is given according to the customized strategy of the product customization process.

Step 3: Evaluation Result Management

After the merchant logs in to the voice evaluation platform, they can view the result report of a certain task in a certain period of time. Service personnel can also view their own evaluation results on the terminal. The evaluation results support checking and tuning of the recorded voice and at the same time marking the detailed rules and rewarding/punishment scores of the hits. The merchant can set manual review policies, and service personnel can also apply for review on the terminal.

Step 4: Intelligent Data Analysis

The platform provides the aforementioned analysis functions such as service quality analysis, correlation analysis, hot spot analysis, and competitive product analysis. The merchant can customize analysis functions and parameters on the platform and conduct statistical analysis and intelligent mining of data over a period of time. For example, the evaluation results of a certain position in some stores can be analyzed as a whole, and common service problems can be discovered, so as to effectively guide the development of training work and improve the overall service level.

The merchant can also export the evaluation and analysis data through the interface for analysis and visual display in their own business systems.

It can be seen that through the intelligent voice evaluation platform design of the present patent application, the entire service chain can be modularized and parameterized, thereby greatly improving the customizability without sacrificing the versatility. An advantage of this is that it can provide affordable, flexible and easy-to-operate voice evaluation services for many offline small and medium-sized merchants such as catering stores, shopping guides, counter sales, product experience stores, etc., so that artificial intelligence technology can be put into practical application to help offline stores improve service quality and provide customers with high-level services.

In some embodiments, the customization platform for service quality evaluation product is configured with a standard speech library, and the text content includes service personnel sentences of service personnel; the evaluation information includes evaluation dimensions configured by users and weights configured for the evaluation dimensions. service quality scoring based on the text content and the evaluation information input and submitted by users includes:

determining a plurality of similarity scores according to similarity values between the service personnel sentences and a plurality of standard speeches in the standard speech library, wherein the standard speech library includes a plurality of evaluation sub-dimension speech libraries corresponding to the evaluation dimensions configured by the user, and a plurality of similarity scores correspond to the plurality of evaluation sub-dimension speech libraries; determining the service quality score of the service personnel based on the plurality of similarity scores.

In the embodiment of the present application, the speech content of the service personnel during the service process is acquired for recording, which is uploaded to the server for processing, converted into text content through voice recognition, and a similarity comparison is performed between the service personnel sentences in the text content and the standard speeches in the standard speech library for determining whether what the current service personnel has said meets or is close to the standard, so that the service quality judgment of the service personnel can be automatically realized.

In some embodiments, determining a plurality of similarity scores according to similarity values between the service personnel sentences and a plurality of standard speeches in the standard speech library includes:
Following steps are performed on each of the plurality of evaluation sub-dimension speech libraries to determine a plurality of similarity scores:

calculating the similarity value between the service personnel sentences and the plurality of standard speeches in the evaluation sub-dimension speech library to determine a plurality of sub-similarity scores; and
determining a maximum value among the plurality of sub-similarity scores as the similarity score under the current evaluation sub-dimension.

In some embodiments, calculating the similarity value between the service personnel sentences and the plurality of standard speeches in the evaluation sub-dimension speech library to determine a plurality of sub-similarity scores includes:

Using a first similarity algorithm, calculating the similarity value between the service personnel sentences and the plurality of standard speeches in the evaluation sub-dimension speech library, and determining the maximum value as a first sub-similarity score;
Using a second similarity algorithm, calculating the similarity value between the service personnel sentences and the plurality of standard speeches in the evaluation sub-dimension speech library, and determining the maximum value as a second sub-similarity score; and
Using a third similarity algorithm, calculating the similarity value between the service personnel sentences and the plurality of standard speeches in the evaluation sub-dimension speech library, and determining the maximum value as a third sub-similarity score;

The first to third sub-similarity scores constitute a plurality of sub-similarity scores.
In some embodiments, the first similarity algorithm is an edit distance algorithm, the second similarity algorithm is a regularization method, and the third similarity algorithm is implemented using a supervised similarity calculation model.
In some embodiments, the plurality of evaluation sub-dimension speech libraries include one or more of the team collaboration speech library, customer maintenance speech library, service expertise speech library, service initiative speech library, service flexibility speech library, and service patience speech library.
In some embodiments, determining the service quality score of the service personnel based on the plurality of similarity scores includes:

performing a weighted summation of the plurality of similarity scores to determine a service quality score of the service personnel.
In some embodiments, a method for monitoring service quality of service personnel can be implemented by the service quality evaluation product customized by the customization platform for service quality evaluation product of the present application, and the method includes:

selecting a sample space, including a plurality of service personnel sentences of a plurality of service personnel, and each service personnel corresponds to a plurality of service personnel sentences;
using the method for monitoring service quality of service personnel in the foregoing embodiment to determine a plurality of similarity scores corresponding to each service personnel sentence in the sample space;
calculating an absolute score of each service personnel in the obtained sample space under each evaluation sub-dimension by the following formula:

$$Lui = \Sigma nSnui / (m + \text{the total number of speeches of service personnel } u)$$

Among them, Lui represents the absolute score of the service personnel u under the evaluation sub-dimension i, m is an average number of speeches of each service personnel in the sample space, and ZnSnui represents the sum of similarity scores of each service personnel sentence of the service personnel u under the evaluation sub-dimension i; and
determining a final service quality score of each service personnel according to the absolute score of each service personnel under each evaluation sub-dimension.
In some embodiments, determining the service quality of each service personnel according to the absolute scores of each service personnel under each evaluation sub-dimension includes:

performing a normal distribution fitting on the sample space for the absolute scores of each service personnel under each evaluation sub-dimension, and using an Erf function to calculate relative scores corresponding to each service personnel under each evaluation sub-dimension;
performing a weighted summation of the relative scores of each service personnel under each evaluation sub-dimension and determining the final service quality score corresponding to each service personnel.

The present application applies to the following scenarios:

Catering: catering stores, noisy environment;
Automobile: 4S shop, customer reception in showroom, generally noisy environment;
Real estate: customer reception at the sales office, on-site viewing, generally noisy environment;
Retail: store counter sales, shopping guide, noisy environment;
Medical: medical institutions, departments, noisy environments;
Transportation: toll entrances, payment outlets, generally noisy environment;
Tourism: travel stores, reception centers, tour guides, noisy environments;
Government: all kinds of government agencies, offices, noisy environment and quiet environment;
Bank: lobby manager, business handling window, generally noisy environment;
Telephone customer service: all kinds of consulting telephone customer service, quiet environment.

The calculation process of the method for monitoring the service quality of service personnel executed by the service quality evaluation product customized by the customization platform for service quality evaluation product of the present application is divided into four stages, and each calculation step is a projection process from a high-dimensional space to a low-dimensional space.

1. Voice, and speaker's user portrait, including the highest dimensional features and containing speech content, context communication information, special scenario information, tone, emotion and voice file meta information. User characteristics mainly include: name, age, responsibilities (manager, waiter, etc.), time, location, store, etc., and these kind of information are mainly used for the screening of sample space.
2. Text, a result of down-projection and compression from the high-dimensional space of speech, including recognized text information, context information and special scenario information, as well as the basic emotional characteristics of the text.
3. Index feature space, further compressing the text information into the agreed staff assessment index feature space, which involves a variety of methods.
4. One-dimensional evaluation space, further compressing and calculating the index obtained in the third step, and finally obtaining a one-dimensional evaluation index, which is a real-time calculation process.

It is mentioned in the foregoing embodiment that the calculation process is divided into 4 stages, all of which are constantly compressing the information of the high-dimensional space into the low-dimensional feature representation, two important steps of which are:

Step A. compressing the text into the agreed index space;
Step B. further compressing the index space into one-dimensional evaluation index.
Step A.1 The method of projecting text content to the index dimension (index space)

Such algorithms are divided into two types, one being an unsupervised similarity calculation method, and the other being a contextual classifier calculation method. The present application employs both unsupervised and supervised similarity calculation methods.

The so-called index dimension is a series of employee assessment criteria defined by users or customers, such as service enthusiasm, explanation expertise, and speech compliance, etc., and each dimension is configured with a certain speech composition to correspond to the speech library for each dimension, and employees will learn these speeches and apply them in their service work.

Before projecting the text content to the above index dimension, it is also necessary to regularize the text content, that is, filtering each sentence of the text according to preset rules. The main preset rules include sentence length (single word filtering) and part-of-speech tagging (irrelevant vocabulary filtering, such as modal particles "ah", "ne", etc.), and the text content left is used for subsequent calculation. Using text regularization can improve the calculation accuracy of similarity and improve the operation efficiency, avoid unnecessary calculations, and save calculation costs.

After filtering the text content, the text similarity is calculated using the following formulas and the similarity scores of various formulas are calculated according to the speech library provided by the user:

Formula 1: Edit distance formula;
Formula 2: Regular formula; and
Formula 3: Supervised similarity calculation model.

The speech library is the training material provided by the customer (user) to the employee and is also the dimension standard for evaluating the employee. For example, one of the speeches in the dimension of "customer maintenance" is "I'm very sorry, our store manager is not here today, I have recorded your comments truthfully, could you please leave your contact information? When the store manager comes back, I will pass the information immediately and let her get back to you. Would that be OK? Thank you very much for your understanding." The user's text content and this speech are associated and the similarity is calculated to determine the score.

Formulas 1-3 have a unified input, which is a sentence pair (q1, q2), where q1 corresponds to the text said by the employee, and q2 corresponds to the speech of a certain dimension.

Score = FUNC(q1, q2), the three formulas are implemented differently.

Formulas 1 and 2 apply to the cold start phase for a new scenario. The present application needs to collect a certain amount of data to support formula 3, a supervised similarity calculation model.

In the cold start stage, regularization and edit distance are used to obtain high-precision evaluation index, but the ability to understand semantics is weak. After obtaining a certain amount of data and completing supervised calculation, the calculation model has the ability to understand semantics and can make an accurate evaluation on employees.

Therefore, using formulas 1 to 3 for service quality evaluation can more accurately score the service quality of service personnel.

Description of the supervised calculation method: after a certain amount of data is accumulated, a time window is used to train a supervised similarity model with semantic understanding and context consideration. The text in a sliding window (5 sentences back) is selected and input into the model together with the speech, and the similarity score of the corresponding dimension is obtained.

In some embodiments, a maximum value of the scores calculated by each formula is taken and a maximum value is calculated for a series of speech libraries as the dimensional evaluation scores of the series of speech.

The calculation method is, for example:

A. obtaining a speech table of a certain dimension (such as "customer maintenance"), where the speech is qb1, qb2, qb3....

B. using formula 1 to obtain the similarity between the user's words q1 and each qb1, qb2, qb3...; Score1_1 = FUNC1(q1, qb1)

Score1_2 = FUNC2(q1, qb2)

C. obtaining the maximum value max(Score1_1, Score1_2...) in Score1_1, Score1_2... as the score score1 of this dimension under formula 1;

D. similarly, using formulas 2 and 3 to obtain scores Score2 and Score3;

E. taking the maximum value score=max(score1, score2, score3) again as the score of this dimension.

F. similarly, calculating and obtaining the corresponding scores for other dimensions.

Description of the above scores: the score obtained here is not the final score, but the score of each sentence of the text recognized by the user. Refer to Table 2 below for an example:

| Waiter | Age | Store | Text | Dimension 1 Score | Dimension 2 Score |
|--------|-----|-------|------|-------------------|-------------------|
| waiter 1 | 18 | store 1 | Good morning | 0.6 | 0.1 |
| waiter 1 | 18 | store 1 | I'm very sorry that our store manager is not here today... | 0.1 | 0.9 |
| waiter 2 | 27 | store 2 | Welcome to our store | 0.8 | 0.1 |

Step B: calculation method of projecting index space to one-dimensional evaluation dimension

The present application uses a special calculation method to calculate the relative evaluation score according to the scores of each index dimension in the index space. The calculation process is as follows:

1. Selecting the sample space. As mentioned earlier, user portraits have a plurality of dimensions, such as name, store, age, and time, etc. All these information can be used as the limiting conditions of the sample space. Customers can combine this information arbitrarily to select a desired sample space.

The so-called sample space refers to a sample under certain specific conditions (it can be an employee or a store).

For example, among all employees, all male employees located in Chongqing whose job duties are waiters are selected as the "sample space";

For example, among all stores, all stores located in "Chongqing" are selected as the "sample space", referring to Table 1.

2. Combining and calculating the evaluation scores of each dimension obtained in step A. The present application uses the following formula to obtain the scores of each dimension, and an absolute score is obtained from this step.

The specific formula is:

$$L_{ui} = \Sigma_n S_{nui} / (m + \textit{the total number of speeches of user u})$$

where m is the average number of speeches per user in the selected sample space (the total number of speeches of all users in the sample space/the number of all users in the sample space). Various dimensions include, for example, service enthusiasm, explanation expertise, and speech compliance, etc. The above formula represents the score under dimension i.

It should be noted that the score with an absolute value above 0.2 can only be selected as the $S_{nui}$ score, which is based on the consideration of filtering invalid text for speech recognition (there are many senseless recognition results such as "um", "ah" and meaningless sentences).

Among them, $u$ represents a certain user, $i$ represents a certain evaluation dimension, and $n$ represents a certain sentence said by the user. This is a smoothing formula where the smoothing factor is the average number of sentences said by all users. If there are three dimensions, this step obtains the scores for the three dimensions.

For example, there are 2 users U1 and U2 in the sample space, U1 said 50 sentences a day, and U2 said 550 sentences a day, then:

an average number of sentences per user per day is: $m=(50+550)/2 = 300$;
a smoothed score of user U1 under dimension i is: $L_{U1i} = \Sigma_{50} S_{nU1i}/(300+50)$;
a smoothed score of user U2 under dimension i is: $L_{U2i} = \Sigma_{550} S_{nU2i}/(300+550)$;

Similarly, the smoothed scores of user U1 and user U2 in other dimensions can be obtained.

Because it is a summation and smoothing formula, and the absolute score value range of each dimension is $[0, +\infty)$, this score needs to be normalized so that users can obtain their own corresponding grades (A, B, B-, etc.).

The use of the above Laplace smoothing formula is mainly based on the following considerations.

First, this smoothing formula satisfies the positive correlation, considering that the employee's degree of excellence is positively correlated with the number of speeches of the employee.

Second, the hidden dangers of cheating can be eliminated. If an employee speaks according to the speech table rather than actually participating in the service, the employee needs a large number of auxiliary speech table rather than a few words. Adding a smoothing factor makes cheating more difficult.

Again, employees are encouraged not to say irrelevant sentences and try to engage in work-related content during working hours.

3. Fitting the sample space with a normal distribution and using Erf function to calculate a relative score.

The meaning of Y=Erf(x) is that the user has the probability of Y to be better in this dimension than other people who participated in the scoring. Because it is necessary to evaluate the service quality ranking of employees, this score is regarded as the relative score of the employee in this dimension, and it is also the final score of this dimension. The parameters in this formula are the mean and variance of the Gaussian formula:

$$\mathrm{erf}(x) = \frac{1}{\sqrt{\pi}} \int_{-x}^{x} e^{-t^2} \, dt$$

$$= \frac{2}{\sqrt{\pi}} \int_{0}^{x} e^{-t^2} \, dt.$$

$$\Pr[X \leq L] = \frac{1}{2} + \frac{1}{2} \mathrm{erf}\left(\frac{L - \mu}{\sqrt{2}\sigma}\right)$$

At last, the relative scores of a plurality of dimensions are weighted and averaged, and finally projected to a one-dimensional evaluation index. In one of the application scenarios of the present application, the plurality dimensions refer to dimensions such as service enthusiasm, explanation expertise, and speech compliance, etc.

In some embodiments, an embodiment of the present application provides a non-volatile computer-readable storage medium for storing one or more programs including execution instructions therein, which can be read and executed by an electronic device (including but not limited to a computer, a server, or a network equipment, etc.) to implement any one of the above-mentioned customization method for service quality evaluation products of the present application.

In some embodiments, an embodiment of the present application further provides a computer program product including a computer program stored on a non-volatile computer-readable storage medium, which includes program instructions enabling a computer executing the instructions to perform any of the above-mentioned customization method for service quality evaluation products.

In some embodiments, an embodiment of the present application further provides an electronic device, including: at least one processor, and a memory communicatively connected to the at least one processor, wherein the memory stores instructions executable by the at least one processor, which are executed by the at least one processor to implement customization method for service quality evaluation product.

In some embodiments, an embodiment of the present application further provides a storage medium storing a computer program, which implements customization method for service quality evaluation product when executed by a processor.

Fig. 6 is a schematic diagram of a hardware structure of an electronic device for executing the customization method for service quality evaluation product according to another embodiment of the present application. As shown in Fig. 6, the device includes:
one or more processors 610 and a memory 620, wherein one processor 610 is shown as an example in Fig. 6.

The device for performing the customization method for service quality evaluation product may further include: an input device 630 and an output device 640.

The processor 610, the memory 620, the input device 630, and the output device 640 may be connected by a bus or in other manners, and the connection by a bus is shown as an example in Fig. 6.

As a non-volatile computer-readable storage medium, the memory 620 can be used to store non-volatile software programs, non-volatile computer-executable programs, and modules, such as program instructions/modules corresponding to the customization method for service quality evaluation product in the embodiment of the present application. The processor 610 executes various functional applications and data processing of the server by running the non-volatile software programs, instructions and modules stored in the memory 620, i.e., implementing the customization method for service quality evaluation product of the above method embodiment.

The memory 620 may include a stored program area and a stored data area, wherein the stored program area may store an operating system, an application program required for at least one function; the stored data area may store data created according to the use of the service quality evaluation product customization device, etc. Additionally, the memory 620 may include high-speed random access memory, and may also include non-volatile memory, such as at least one magnetic disk storage device, flash memory device, or other non-volatile solid-state storage device. In some embodiments, the memory 620 may optionally include memories located remotely from the processor 610, and these remote memories may be connected to the service quality evaluation product customization device via a network. Examples of such network include, but are not limited to, the Internet, an intranet, a local area network, a mobile communication network, and combinations thereof.

The input device 630 may receive input numerical or character information, and generate signals related to user settings and function control of the service quality evaluation product customization device. The output device 640 may include a display device such as a display screen.

One or more modules are stored in the memory 620, and when executed by the one or more processors 610, the customization method for service quality evaluation product in any of the above method embodiments is performed.

The above-mentioned products can perform the method according to the embodiments of the present application and have corresponding function modules and beneficial effects for performing the method. For technical details that are not described in detail in this embodiment, reference may be made to the method provided in the embodiments of the present application.

The electronic device in the embodiments of the present application exists in various forms, including but not limited to:

(1) Mobile communication device which features in its mobile communication function and the main goal thereof is to provide voice and data communication, such as smart phones (such as iPhone), multimedia phones, functional phones, and low-end phones;
(2) Ultra-mobile personal computer device which belongs to the category of personal computers and has computing and processing functions and generally mobile Internet access capability, such as PDA, MID and UMPC devices, e.g., iPad;
(3) Portable entertainment devices which can display and play multimedia content, such as audio and video players (such as iPod), handheld game consoles, e-books, and smart toys and portable car navigation devices;

(4) Server providing computing services and including a processor, hard disk, memory, system bus, etc., with a similar architecture to a general-purpose computer but a higher processing power and stability, reliability, security, scalability, manageability and for providing highly reliable services; and
(5) Other electronic devices with data interaction function.

The device embodiments described above are only exemplary. The units described as separate components may or may not be physically separated, and the components displayed as units may or may not be physical units, that is, may be located in one place, or it can be distributed to multiple network elements. Some or all of the modules may be selected according to actual needs to achieve the object of the solution of this embodiment.

Through the description of the above embodiments, those skilled in the art can clearly understand that each embodiment can be implemented by means of software plus a common hardware platform, and of course, it can also be implemented by hardware. Based on this understanding, the above technical solutions can essentially be embodied in the form of software products that contribute to related technologies, and the computer software products can be stored in computer-readable storage media, such as ROM/RAM, magnetic disks, CD-ROM, etc., including several instructions to enable a computer device (which may be a personal computer, server, or network device, etc.) to perform the method described in each embodiment or some parts of the embodiment.

## Claims

1.  A customization platform for service quality evaluation product, comprising:

    an account management module configured to generate a registration interface and a product creation interface for guiding a user to register and log in, so as to customize a service quality evaluation product;
    an access mode configuration module configured to generate a product access mode configuration interface for guiding the user to configure an access mode for the service quality evaluation product;
    a voice transcription configuration module configured to generate an industry type selection interface for guiding the user to select an industry type and select a corresponding voice recognition model for pre-training according to the industry type, and wherein the pre-trained voice recognition model is used to convert an input audio file to a text content; and
    a semantic analysis configuration module configured to generate an evaluation information configuration interface for guiding the user to complete the input and submission of the evaluation information, so as to perform service quality scoring according to the text content and the evaluation information input and submitted by the user.

2.  The method of claim 1, wherein the evaluation information configuration interface comprises:

    a sub-interface for guiding the user to configure evaluation dimensions; and
    a sub-interface for guiding the user to configure weights for the evaluation dimensions.

3.  The method of claim 2, wherein the evaluation information configuration interface further comprises:
    a sub-interface for guiding the user to configure an evaluation function for each of the evaluation dimensions.

4.  The method of claim 3, wherein after the user completes the configuration of evaluation functions, the method further comprises:
    automatically configuring a preset standard speech library for each of the evaluation functions.

5.  The method of claim 3 or 4, wherein the evaluation information configuration interface further comprises:

    a sub-interface for guiding the user to configure quality inspection rules for each of the evaluation functions; and
    a sub-interface for guiding the user to upload the rules.

6.  The method of claim 1, wherein the voice transcription configuration module is further configured to generate a training sample upload interface, and the training samples comprises hot word terms and business corpus; and
    wherein said selecting a corresponding voice recognition model for pre-training according to the industry type comprises:
    pre-training the corresponding voice recognition model according to the hot word terms and business corpus.

7. The method of claim 2, wherein the customization platform for service quality evaluation product is configured with a standard speech library, and the text content comprises service personnel sentences of the service personnel; the evaluation information comprises evaluation dimensions configured by the user and weights configured for the evaluation dimensions; and

   wherein said service quality scoring based on the text content and the evaluation information input and submitted by the user comprises:

   determining a plurality of similarity scores according to similarity values between the service personnel sentences and a plurality of standard speeches in the standard speech library, wherein the standard speech library comprises a plurality of evaluation sub-dimension speech libraries corresponding to the evaluation dimensions configured by the user, and the plurality of similarity scores correspond to the plurality of evaluation sub-dimension speech libraries; and
   determining the service quality score of the service personnel based on the plurality of similarity scores.

8. A customization method for service quality evaluation product, comprising:

   an account management step which generates a registration interface and a product creation interface for guiding a user to register and log in, so as to customize a service quality evaluation product;
   an access mode configuration step which generates a product access mode configuration interface for guiding the user to configure an access mode for the service quality evaluation product;
   a voice transcription configuration step which generates an industry type selection interface for guiding the user to select an industry type and select a corresponding voice recognition model for pre-training according to the industry type, and wherein the pre-trained voice recognition model is used to convert an input audio file to a text content; and
   a semantic analysis configuration step which generates an evaluation information configuration interface for guiding the user to complete the input and submission of the evaluation information, so as to perform service quality scoring according to the text content and the evaluation information input and submitted by the user.

9. An electronic device, comprising: at least one processor, and a memory communicatively connected to the at least one processor, wherein the memory stores instructions executable by the at least one processor, which are executed by the at least one processor to enable the at least one processor to perform steps of the method of claim 8.

10. A storage medium storing a computer program, wherein the program implements steps of the method of claim 8 when executed by a processor.

100 — Customization platform for service quality evaluation

110 — Account management module

120 — Access mode configuration module

130 — Voice transcription configuration module

140 — Semantic analysis configuration module

Fig. 1

An account management step of generating a registration interface and a product creation interface for guiding a user to register and log in, so as to customize a quality of service evaluation product — S10

An access mode configuration step of generating a product access mode configuration interface for guiding the user to configure an access mode for the quality of service evaluation product — S20

A voice transcription configuration step of generating an industry type selection interface for guiding the user to select an industry type and select a corresponding voice recognition model for pre-training according to the industry type, and wherein the pre-trained voice recognition model is used to convert an input audio file to a text content — S30

A semantic analysis configuration step of generating an evaluation information configuration interface for guiding the user to complete the input and submission of the evaluation information, so as to perform quality of service scoring according to the text content and the evaluation information input and submitted by the user — S40

Fig. 2

Acquisition Terminal

| App | SDK | API |

Noise Reduction

Endpoint Detection

Voice Acquisition Platform

Checking of recorded voice

Merchant System

| Product Creation | Device Access | Voice Transcription Customization | Semantic Analysis Customization | Business Interface |

Voice Transcription Platform

| Hot Word Terms | Business Corpus | Model Training |

Core Engine

| Speaker Separation | ASR | Emotion Detection |

Semantic Analysis Platform

| Quality Inspection | Analysis | Data Report |

Core Engine

| NLU | Rule Parsing | Big Data Analysis |

Fig. 3

Product Creation

↓

Device Access

↓

Voice Transcription Customization

↓

Semantic Analysis Customization

Fig. 4

```
┌─────────────────────┐
│  Employee Account   │
│     Management      │
└─────────────────────┘
          │
          ▼
┌─────────────────────┐
│  Evaluation Task    │
│     Management      │
└─────────────────────┘
          │
          ▼
┌─────────────────────┐
│  Evaluation Result  │
│     Management      │
└─────────────────────┘
          │
          ▼
┌─────────────────────┐
│  Intelligent Data   │
│      Analysis       │
└─────────────────────┘
```

Fig. 5

```
┌──────────┐ 620
│  Memory  │
└──────────┘          ┌──────────┐ 630
     │                │  Input   │
     │                │  Device  │
     │                └──────────┘
     │
     ├────────────────┤
     │                │
┌──────────┐ 610      ┌──────────┐ 640
│Processor │          │  Output  │
└──────────┘          │  Device  │
                      └──────────┘
```

Fig. 6

**INTERNATIONAL SEARCH REPORT**

International application No.

**PCT/CN2019/124127**

### A. CLASSIFICATION OF SUBJECT MATTER

G06Q 10/06(2012.01)i

According to International Patent Classification (IPC) or to both national classification and IPC

### B. FIELDS SEARCHED

Minimum documentation searched (classification system followed by classification symbols)

G06Q; G10L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT: 服务, 质量, 评分, 评测, 评估, 测评, 用户, 客户, 定制, 订制, 个性化, 通用, 语音, 选择, 配置, 行业, service, quality, evaluate, assessment, user, custom, personalization, general, language, industry, choose, configuration

### C. DOCUMENTS CONSIDERED TO BE RELEVANT

| Category* | Citation of document, with indication, where appropriate, of the relevant passages | Relevant to claim No. |
|---|---|---|
| A | CN 110069784 A (GUANGDONG POWER GRID CO., LTD. et al.) 30 July 2019 (2019-07-30) <br> description, paragraphs [0062]-[0070] | 1-10 |
| A | CN 107133709 A (ALIBABA GROUP HOLDING LIMITED) 05 September 2017 (2017-09-05) <br> entire document | 1-10 |
| A | CN 109410921 A (MIAOZHEN INFORMATION TECHNOLOGY CO., LTD.) 01 March 2019 (2019-03-01) <br> entire document | 1-10 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **14 January 2020** | **23 January 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/124127**

| Patent document cited in search report | | | Publication date (day/month/year) | Patent family member(s) | Publication date (day/month/year) |
|---|---|---|---|---|---|
| CN | 110069784 | A | 30 July 2019 | None | |
| CN | 107133709 | A | 05 September 2017 | None | |
| CN | 109410921 | A | 01 March 2019 | None | |

Form PCT/ISA/210 (patent family annex) (January 2015)

**EP 4 036 823 A1**